# EUROPÄISCHE PATENTSCHRIFT

(11) **EP 1 144 082 B1**
(45) Veröffentlichungstag und Bekanntmachung des Hinweises auf die Patenterteilung: **22.11.2006**
(21) Anmeldenummer: 00967774.1
(22) Anmeldetag: 26.09.2000
(51) Int. Cl.: B01D 46/42, B01D 35/14

(54) **FILTERGERÄT ZUM FILTERN VON DRUCKLUFT**
FILTERING APPARATUS FOR FILTERING COMPRESSED AIR
APPAREIL DE FILTRATION POUR FILTRER DE L'AIR COMPRIME

(30) Priorität: 28.10.1999 DE 19951961
(43) Veröffentlichungstag der Anmeldung: 17.10.2001
(73) Patentinhaber: Festo AG & Co., 73734 Esslingen (DE)
(72) Erfinder: FRANZ, Jochen, 72762 Reutlingen (DE); GEBAUER, Günter, 73728 Esslingen (DE)
(74) Vertreter: Abel, Martin
(86) Internationale Anmeldenummer: PCT/EP2000/009351
(87) Internationale Veröffentlichungsnummer: WO 2001/030483

(56) Entgegenhaltungen:
- WO-A-94/20784
- DE-A- 19 504 327
- US-A- 4 179 372
- US-A- 4 721 563
- US-A- 5 378 254

## Beschreibung

Die Erfindung betrifft ein Filtergerät zum Filtern von Druckluft, mit einer zu Reinigungs- und/oder Austauschzwecken deinstallierbaren Filtereinrichtung, mit einer zur Detektion der Filtereinrichtung dienenden und mindestens ein vom detektierten Ergebnis abhängiges elektrisches Detektionssignal hervorrufenden Detektionseinrichtung, mit einem zwischen einem Einlass und einem Auslass verlaufenden Fluid-Hauptkanal, der durch die installierte Filtereinrichtung in einen Zuströmabschnitt und einen Abströmabschnitt unterteilt wird, und mit Mitteln zur Erkennung des Verschmutzungsgrades der Filtereinrichtung unter Berücksichtigung der zwischen dem Zuströmabschnitt und dem Abströmabschnitt herrschenden Druckdifferenz.

Filtereinrichtungen dieser Art, wie sie beispielsweise aus der US-A-4 721 563 bekannt sind, kommen insbesondere im Zusammenhang mit sogenannten Wartungseinheiten zum Einsatz, die für die Druckluftaufbereitung innerhalb von Druckluftnetzen eingesetzt werden. Das Filtergerät, das beispielsweise auch mit einem Druckregler kombiniert sein könnte, verfügt über einen in die Fluidleitungsanordnung des Druckluftnetzes einschaltbaren Grundkörper, an dem lösbar eine patronenartige Filtereinrichtung angeordnet ist, die die hindurchströmende Druckluft von Verunreinigungen säubert.

Problematisch ist es, wenn an ein Druckluftnetz angeschlossene Maschinen und Geräte betrieben werden, obwohl das Filtergerät, beispielsweise bedingt durch vorausgegangene Wartungsarbeiten, nicht oder mit einem falschen Typ einer Filtereinrichtung ausgestattet ist. Daher ist das bekannte Filtergerät mit einer Detektionseinrichtung ausgestattet, die das Vorhandensein oder das Nichtvorhandensein einer Filtereinrichtung meldet, indem sie einen von der Filtereinrichtung betätigbaren Schalter aufweist, der optische oder akustische Mittel betätigen kann.

Die bekannte Filtereinrichtung enthält zusätzlich noch Mittel zur Erkennung des Verschmutzungsgrades der Filtereinrichtung. Diese bestehen aus einem Bypass-Ventil, das auf die zwischen dem Zuströmabschnitt und dem Abströmabschnitt des Fluid-Hauptkanals herrschende Druckdifferenz anspricht und das öffnet, wenn aufgrund einer zu starken Verschmutzung der Filtereinrichtung ein hoher Druckabfall auftritt.

Die US-A-5 674 381 beschreibt ein Filtergerät, bei dem die austauschbare Filtereinrichtung mit einem elektronischen Etikett versehen ist, das spezifische Daten der Filtereinrichtung trägt, die von einer Auswerteelektronik ausgewertet werden können. Ist nicht die richtige Filtereinrichtung installiert, verhindert die Auswerteelektronik die Inbetriebnahme des Filtergerätes. Das elektronische Etikett enthält außerdem Informationen über den Zeitraum, nach dessen Verstreichen ein Austausch der Filtereinrichtung zu erfolgen hat.

Die DE-A-19504327 offenbart eine Konditioniervorrichtung mit einem Filterelement, das ausgetauscht oder gereinigt werden kann, wenn es verbraucht ist. Der aktuelle Verbrauchszustand wird in einer Auswerteelektronik anhand des Druckverlustes und der Durchflussmenge des die Konditioniervorrichtung durchströmenden Fluidstromes und durch Vergleich mit gespeicherten Daten ermittelt.

Aus der EP 0 909 577 ist eine Anlage zum Reinigen kontaminierter Luft bekannt, die mit Sensoren ausgestattet ist, welche ein Warnsignal verursachen, wenn die Anlage ohne Filtereinrichtung in Betrieb genommen wird.

Bei einem in der US-A-5 378 254 beschriebenen Luftbehandlungssystem wird das Vorhandensein oder Nichtvorhandensein einer Filtereinrichtung durch einen von der Filtereinrichtung betätigbaren Mikroschalter detektiert. Es wird außerdem zeitabhängig ein Signal erzeugt, das die Notwendigkeit zum Austausch der Filtereinrichtung kenntlich macht.

Es ist die Aufgabe der vorliegenden Erfindung, ein Filtergerät zu schaffen, mit dem sich durch fehlende oder falsche Bestückung oder durch Verschmutzung einer Filtereinrichtung hervorrufende Beeinträchtigungen vermeiden lassen.

Zur Lösung dieser Aufgabe ist vorgesehen,
- dass die Detektionseinrichtung zur Erkennung des momentan installierten Filtereinrichtungstyps ausgebildet ist und ein filtereinrichtungstypspezifisches Detektionssignal hervorrufen kann,
- dass die Mittel zur Erkennung des Verschmutzungsgrades der Filtereinrichtung eine den Differenzdruck zwischen dem Zuströmabschnitt und dem Abströmabschnitt erfassende Differenzdruck-Sensoreinrichtung und eine die Durchflussrate im Fluid-Hauptkanal erfassende Durchfluss-Sensoreinrichtung enthalten, wobei die erfassten Differenzdruck- und Durchflusswerte in einer elektronischen Auswerteeinrichtung zu einem für den Verschmutzungsgrad der Filtereinrichtung relevanten und in einer Vergleichseinrichtung mit vorgegebenen Grenzwerten zu vergleichenden Zustandswert verknüpft werden,
- dass die Auswerteeinrichtung eine Speichereinrichtung enthält, in der Grenzwerte für mehrere unterschiedliche Filtereinrichtungstypen abgespeichert sind,
- und dass eine Auswahleinrichtung zur typspezifischen Grenzwertselektion unter Berücksichtigung des anliegenden Detektionssignals der Detektionseinrichtung vorhanden ist.

Die Detektionseinrichtung ist so ausgebildet, dass sie die Erkennung des momentan installierten Filtereinrichtungstyps ermöglicht und ein filtereinrichtungstypspezifisches Detektionssignal hervorrufen kann. Anhand der vorhandenen Mittel zur Erkennung des Verschmutzungsgrades der momentan eingesetzten Filtereinrichtung kann der Zeitpunkt für ein notwendiges Austauschen oder Reinigen der betreffenden Filtereinrichtung ermittelt werden. Die Filtereinrichtung sitzt dabei in einem Fluid-Hauptkanal, den sie in einen einem Einlass zugeordneten Zuströmabschnitt und einen einem Auslass zugeordneten Abströmabschnitt unterteilt, wobei die Erkennungsmittel eine den Differenzdruck zwischen dem Zuströmabschnitt und dem Abströmabschnitt erfassende Differenzdruck-Sensoreinrichtung und eine die Durchflussrate im Fluid-Hauptkanal erfassende Durchfluss-Sensoreinrichtung enthalten. Die erfassten Differenzdruck- und Durchflusswerte werden in der elektronischen Auswerteeinrichtung zu einem für den Verschmutzungsgrad der Filtereinrichtung relevanten Zustandswert verknüpft, der sich mit vorgegebenen Grenzwerten vergleichen lässt. Im Gegensatz zu allein auf der Erfassung des Differenzdruckes basierenden Erkennungsmitteln lässt sich auf diese Weise gewährleisten, dass der kritische Verschmutzungsgrad auch dann erkannt wird, wenn im Betrieb der mit dem Filtergerät ausgestatteten Anlage, bedingt durch Zuschalten und/oder Abschalten von Verbrauchern, unterschiedliche Durchflussraten auftreten.

Es ist eine elektronische Auswerteeinrichtung für die Auswertung der hervorgerufenen Detektionssignale vorhanden. Sie kann extern vorgesehen sein und über geeignete Kommunikationsmittel mit dem Filtergerät in Verbindung stehen. Bei einer besonders kompakt bauenden Anordnung ist die Auswerteeinrichtung als unmittelbarer Bestandteil des Filtergerätes ausgeführt oder als Bestandteil einer Druckluft-Wartungseinheit, zu der das Filtergerät gehört. Die elektronische Auswerteeinrichtung verfügt über eine Vergleichseinrichtung, in der der Vergleich zwischen dem ermittelten Zustandswert und den vorgegebenen Grenzwerten stattfindet, wobei eine Speichereinrichtung vorhanden ist, die es ermöglicht, Grenzwerte für mehrere unterschiedliche Filtereinrichtungstypen abzuspeichern, wobei durch eine Auswahleinrichtung eine vom Filtereinrichtungstyp abhängige Grenzwertselektion stattfindet, bei der die von der Detektionseinrichtung gelieferten elektrischen Detektionssignale berücksichtigt werden.

Vorteilhafte Weiterbildungen der Erfindung gehen aus den Unteransprüchen hervor.

Die Detektionseinrichtung verfügt zweckmäßigerweise über der Filtereinrichtung zugeordnete Aktivierungsmittel, die bei installierter Filtereinrichtung zur Erzeugung eines Detektionssignales direkt oder indirekt mit gehäuseseitig am Filtergerät vorgesehenen Sensormitteln zusammenarbeiten. Die Sensormittel können beispielsweise mechanisch oder berührungslos aktivierbar ausgeführt sein, wobei im letzteren Falle beispielsweise eine optische oder magnetische Aktivierung vorgesehen sein kann. So können die Sensormittel beispielsweise mindestens einen magnetfeldempfindlichen Sensor enthalten, der auf einen Permanentmagneten anspricht, der bei der Installation und/oder bei der Deinstallation einer Filtereinrichtung durch diese zu einer Bewegung veranlasst wird.

Denkbar wäre eine Bauform, bei der die Aktivierungsmittel direkt mit den gehäuseseitigen Sensormitteln zusammenarbeiten. Um eine optimale Konzeption des Filtergerätes realisieren zu können, bietet es sich jedoch an, eine indirekte Betätigung vorzusehen, indem die Aktivierungsmittel unter Zwischenschaltung einer Signalübertragungseinrichtung mit den Sensormitteln zusammenarbeiten. Die Signalübertragungseinrichtung kann beispielsweise von einem gehäuseseitig verschiebbar geführten Stößel gebildet sein, der in der Installation- und Deinstallationsrichtung der Filtereinrichtung verschiebbar ist und beim Installieren bzw. Deinstallieren der Filtereinrichtung relativ zu den Sensormitteln bewegt wird.

Bei einer konstruktiv besonders einfachen Lösung sind die Aktivierungsmittel von mindestens einer auf die Signalübertragungseinrichtung einwirkenden Beaufschlagungsfläche gebildet, die an der betreffenden Filtereinrichtung vorgesehen ist.

Die Detektionseinrichtung kann zusätzlich so ausgebildet sein, dass sie die Detektion des Vorhandenseins und/oder der Abwesenheit einer Filtereinrichtung ermöglicht, wobei das Detektionssignal ein einfaches Ja/Nein-Signal sein kann. Somit wäre beispielsweise die Möglichkeit gegeben, bei fehlender Filtereinrichtung oder falschem Filtereinrichtungstyp ein Detektionssignal hervorzurufen, das eine Inbetriebnahme angeschlossener Maschinen und/oder Geräte verhindert.

Um ein filtereinrichtungstypspezifisches Detektionssignal hervorzurufen, können die verschiedenen Filtereinrichtungstypen über unterschiedlich gestaltete Aktivierungsmittel verfügen. Im Falle der vorerwähnten Beaufschlagungsflächen könnte in diesem Zusammenhang an den Filtereinrichtungen unterschiedlichen Typs eine bezogen auf die Installations- und Deinstallationsrichtung unterschiedliche Positionierung vorgesehen werden, so dass die zugeordnete Signalübertragungseinrichtung in Abhängigkeit vom Typ der eingesetzten Filtereinrichtung unterschiedlich weit mit Bezug zu den Sensormitteln verlagert wird.

Die Mittel zur Erkennung des Verschmutzungsgrades verfügen vorzugsweise auch über eine den im Zuströmabschnitt des Fluid-Hauptkanals herrschenden Eingangsdruckwert erfassende Eingangsdruck-Sensoreinrichtung, wobei der ermittelte Eingangsdruckwert in der elektronischen Auswerteeinrichtung bei der Ermittlung des momentanen Zustandswertes mit berücksichtigt wird, so dass sich das Filtergerät universell und unabhängig vom momentan anliegenden Eingangsdruckwert betreiben lässt.

Nachfolgend wird die Erfindung anhand der beiliegenden Zeichnung näher erläutert. In dieser zeigen:
- Figur 1: eine bevorzugte Ausführungsform des erfindungsgemäßen Filtergerätes in perspektivischer Explosionsdarstellung,

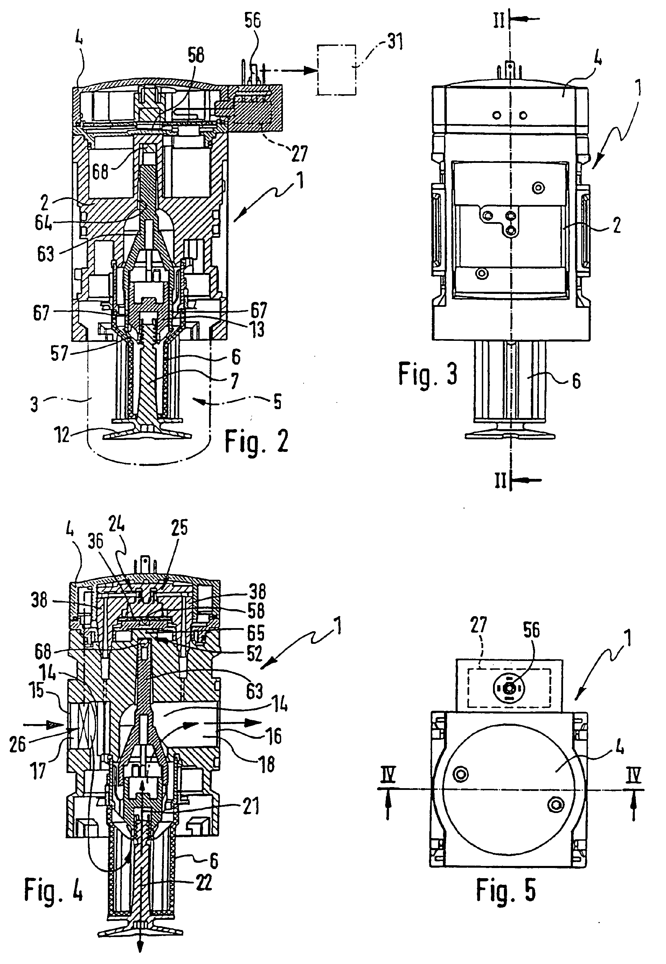

- Figur 2: das Filtergerät aus Figur 1 im Längsschnitt gemäß Schnittlinie II-II aus Figuren 1 und 3,
- Figur 3: eine Seitenansicht des Filtergerätes mit Blickrichtung gemäß Pfeil III aus Figur 1,
- Figur 4: eine weitere Längsschnittdarstellung des Filtergerätes gemäß Schnittlinie IV-IV aus Figur 1 mit einer zur Darstellung der Figur 2 rechtwinkeligen Schnittebene,
- Figur 5: eine Draufsicht auf das Filtergerät mit Blickrichtung gemäß Pfeil V aus Figur 1,

- Figur 6: eine stark schematisierte Darstellung des Filtergerätes zur Erläuterung eines vorteilhaften Aufbaues der elektronischen Auswerteeinrichtung, und
- Figur 7: ein Diagramm, das die Wirkungsweise der zur Erkennung des Verschmutzungsgrades der Filtereinrichtung dienenden Mittel deutlich macht, wobei der Druckabfall Δp in Abhängigkeit von der Durchflussrate q aufgetragen ist, und zwar bei einer dem Neuzustand einer Filtereinrichtung wiedergebenden Zustandswert-Kennlinie "a" und mit Darstellung einer die vorgegebenen Grenzwerte repräsentierenden Grenzwert-Kennlinie "b".

Das insgesamt mit Bezugsziffer 1 versehene Filtergerät enthält ein Gehäuse mit einem beispielsweise quaderähnlichen Grundkörper 2, eine an dessen Unterseite unter Abdichtung lösbar angebrachte becherähnliche Filterschale 3 und ein oben auf den Grundkörper 2 aufgesetztes Kopfstück 4.

Die Filterschale 3 begrenzt gemeinsam mit dem Grundkörper 2 einen Filterraum 5, in dem, entnehmbar, eine patronenartige Filtereinrichtung 6 aufgenommen ist.

Die einen hohlzylinderähnlichen Aufbau besitzende Filtereinrichtung 6 ist in ihrer Axialrichtung von unten her an den Grundkörper 2 angesetzt und lösbar an diesem befestigt. Zur Befestigung dient vorliegend eine Befestigungsschraube 7, die von unten her durch den zentralen Hohlraum 8 der Filtereinrichtung 6 hindurchgesteckt ist, wobei sie die Filtereinrichtung 6 von unten her mit einem Teller 12 beaufschlagt und mit ihrem oberen Ende in das Innengewinde eines fest mit dem Grundkörper 2 verbundenen Befestigungsteils 13 eingeschraubt ist. Letzteres ist beim Ausführungsbeispiel als separates Bauteil am Grundkörper 2 befestigt und hat einen hülsenähnlichen Aufbau.

Das Filtergerät 1 ist von einem Fluidhauptkanal 14 durchsetzt, der über einen Einlass 15 und einen Auslass 16 verfügt, die beide, zweckmäßigerweise an einander entgegengesetzten Außenseiten, am Grundkörper 2 vorgesehen sind. Einlass 15 und Auslass 16 sind nicht näher dargestellte Verbindungsmittel zugeordnet, die eine lösbare Verbindung mit weiterführenden Fluidleitungen ermöglichen. Das Filtergerät 1 wird im Betrieb von Druckluft durchströmt, die über die erwähnten Fluidleitungen in den Einlass 15 eingespeist und über den Auslass 16 abgeführt wird.

Die Filtereinrichtung 6 ist in den Verlauf des Fluid-Hauptkanals 14 eingeschaltet und unterteilt diesen in einen dem Einlass 15 zugeordneten Zuströmabschnitt 17 und einen dem Auslass 16 zugeordneten Abströmabschnitt 18. Der Zuströmabschnitt 17 erstreckt sich im Bereich des Außenumfanges der Filtereinrichtung 6 in den Filterraum 5 hinein, während der Abströmabschnitt 18 mit dem Hohlraum 8 der Filtereinrichtung 6 in Verbindung steht. Die einströmende Druckluft durchströmt somit die Filtereinrichtung 6 im Innern des Filterraumes 5 von außen nach innen und tritt über den Hohlraum 8 und den Abströmabschnitt 18 über den Auslass wieder aus. Beim Hindurchströmen durch die Filtereinrichtung 6 wird die Druckluft gefiltert und von Verunreinigungen befreit, die in der Filtereinrichtung 6 zurückbleiben.

Die Strömungsrichtung könnte auch umgekehrt sein. In der Regel wird man die Strömungsrichtung der Luft vom Typ der verwendeten Filtereinrichtung 6 abhängig machen.

Das Filtergerät 1 lässt sich als zur Druckluftaufbereitung dienendes Wartungsgerät bezeichnen, das in den Verlauf eines Druckluftnetzes eingeschaltet wird. Es kann wie geschildert als Einzelgerät Verwendung finden. Möglich ist aber auch eine kombinierte Verwendung zusammen mit einem oder mehreren weiteren Wartungsgeräten, beispielsweise einem Reglergerät und/oder einem Ölergerät, wobei es mit diesen weiteren Geräten modulartig zu einer Wartungseinheit zusammengefasst sein kann. Weitere Wartungsgeräte können an den den Einlass 15 und Auslass 16 aufweisenden Außenseiten anstelle der oben erwähnten Fluidleitungen angesetzt werden.

Durch die zurückgehaltenen Verunreinigungen setzen sich die Filterporen der Filtereinrichtung 6 allmählich zu, die Filtereinrichtung 6 verschmutzt. Rechtzeitig bevor die durch die Filtereinrichtung 6 zugelassene Durchströmrate der Druckluft, also die pro Zeiteinheit hindurchströmende Luftmenge, unter ein kritisches Maß fällt, das insbesondere von den an das Druckluftnetz angeschlossenen Verbrauchern abhängt, sollte die Filtereinrichtung 6 gereinigt oder durch eine unverschmutzte neue Filtereinrichtung 6 ausgetauscht werden. Die hierzu notwendige Deinstallation der Filtereinrichtung 6 geschieht durch Entfernen der Filterschale 3 und der Befestigungsschraube 7, wonach die Filtereinrichtung 6 in einer mit ihrer Längsachse zusammenfallenden Deinstallationsrichtung 22 nach unten hin abgenommen werden kann. Die anschließende erneute Montage erfolgt in umgekehrter Reihenfolge, wobei die Installationsrichtung 21 der Filtereinrichtung 6 entgegengesetzt zur Deinstallationsrichtung 22 nach oben orientiert ist.

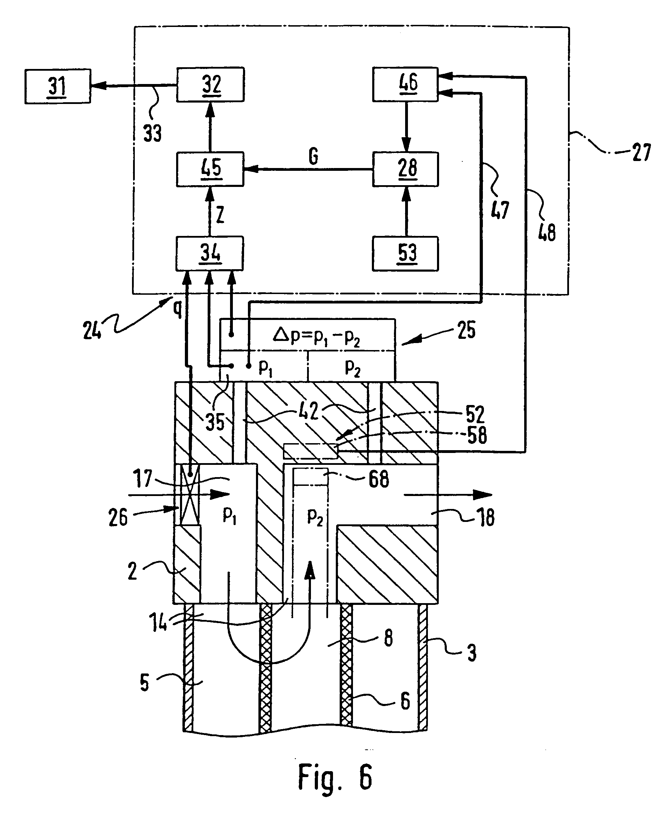

Zum Erhalt des für den Austausch bzw. die Reinigung der Filtereinrichtung 6 angemessenen Zeitpunktes ist das Filtergerät mit Mitteln zur Erkennung des Verschmutzungsgrades der Filtereinrichtung 6 ausgestattet, die nachfolgend vereinfacht als Erkennungsmittel 24 bezeichnet werden. Bezugnehmend auch auf Figur 6, enthalten die Erkennungsmittel 24 eine den Differenzdruck Δp zwischen dem Zuströmabschnitt 17 und dem Abströmabschnitt 18 des Fluid-Hauptkanals 14 erfassende Differenzdruck-Sensoreinrichtung 25 und eine die Durchflussrate im Fluid-Hauptkanal 14 erfassende Durchfluss-Sensoreinrichtung 26. Ferner verfügen die Erkennungsmittel 24 über eine elektronische Auswerteeinrichtung 27, in der die erfassten Differenzdruck- und Durchflusswerte zu einem für den Verschmutzungsgrad der Filtereinrichtung 6 relevanten Zustandswert "Z" verknüpft und mit in einer Speichereinrichtung 28 abgelegten Grenzwerten "G" verglichen wird. Eine ebenfalls zur elektronischen Auswerteeinrichtung 27 gehörende Meldeeinrichtung 32 ist in der Lage, den aktuell ermittelten Zustandswert und/oder das Erreichen oder Überschreiten der der betreffenden Filtereinrichtung zugeordneten Grenzwerte zu melden. Die Meldung könnte optisch und/oder akustisch erfolgen, geschieht vorliegend allerdings durch Ausgabe eines in einer elektronischen Steuereinrichtung 31 weiterverarbeitbaren elektrischen Meldesignals 33.

Die abgespeicherten Grenzwerte sind auf der gleichen Basis gebildet wie die Zustandswerte, also unter Einbeziehung von Differenzdruck- und Durchflusswerten.

Die Differenzdruck-Sensoreinrichtung 25 ist beim Ausführungsbeispiel so ausgelegt, dass sie sowohl den im Zuströmabschnitt herrschenden Eingangsdruckwert p₁ als auch den im Abströmabschnitt 18 herrschenden Ausgangsdruckwert p₂ erfasst und daraus den an der Filtereinrichtung 6 anstehenden Differenzdruck Δp = p₁ - p₂ ermittelt. Dieser Differenzdruckwert Δp wird ebenso wie der zugehörige Durchflusswert q innerhalb einer Verknüpfungseinrichtung 34 der elektronischen Auswerteeinrichtung 27 zu einem aktuellen Zustandswert "Z" verknüpft, wobei bei der Verknüpfung vorzugsweise auch der ermittelte Eingangsdruckwert p₁ in eigenständiger Form berücksichtigt wird. Die Funktion der entsprechenden Eingangsdruck-Sensoreinrichtung 35 wird der Einfachheit halber von der Differenzdruck-Sensoreinrichtung 25 übernommen, wenngleich auch eine separate Sensoreinrichtung vorgesehen sein könnte.

Die Differenzdruck-Sensoreinrichtung 25 ist beim Ausführungsbeispiel im Innern des Kopfstückes 4 untergebracht. Sie sitzt auf einer zweckmäßigerweise als Leiterplatte ausgeführten Trägerplatte 36, die an der Innenseite eines Bodenteils 37 des Kopfstückes 4 angeordnet ist, mit dem das Kopfstück 4 auf dem Grundkörper 2 sitzt. Mit internen Fluidkanälen versehene Umlenkteile 38 der Differenzdruck-Sensoreinrichtung 25 durchgreifen das Bodenteil 37 und tauchen unter Abdichtung in zwei im Grundkörper 2 verlaufende Verbindungskanäle 42 ein, deren einer mit dem Zuströmabschnitt 17 und deren anderer mit dem Abströmabschnitt 18 verbunden ist. Auf diese Weise gelangen die Drucksignale zur Differenzdruck-Sensoreinrichtung 25, die somit in vorteilhafter Weise außerhalb des Grundkörpers 2 angeordnet werden kann.

Ein unter Abdichtung auf das Bodenteil 37 aufgesetztes Deckelteil 43 des Kopfstückes 4 sorgt dafür, dass die Differenzdruck-Sensoreinrichtung 25 geschützt untergebracht ist.

Die Durchfluss-Sensoreinrichtung 26 ist beim Ausführungsbeispiel im Zuströmabschnitt 17 des Fluid-Hauptkanals 14 untergebracht, könnte aber auch an anderer Stelle des Fluid-Hauptkanals 14 platziert oder in Gestalt einer bezüglich des Filtergerätes 1 separat installierten Einrichtung ausgeführt sein. Die integrierte Bauform ermöglicht die Realisierung kompakter Abmessungen bei geringstem anschlusstechnischem Aufwand.

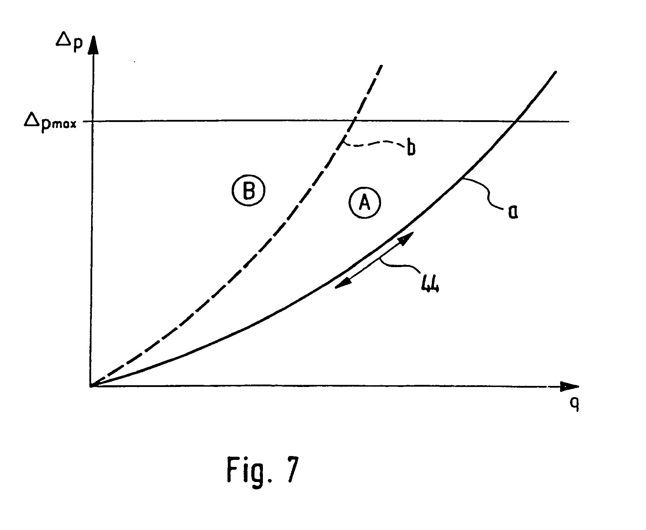

Für den Fall, dass das Filtergerät 1 nur für einen ganz bestimmten Filtereinrichtungstyp ausgelegt ist und ein Betrieb nur mit einem ganz bestimmten Eingangsdruck p₁ stattfindet, können die zugeordneten Grenzwerte "G" in Gestalt einer Grenzwertkennlinie in der Speichereinrichtung 28 abgelegt sein. Eine solche Grenzwertkennlinie "b" ist in Figur 7 exemplarisch in gestrichelten Linien aufgetragen und gibt die zulässigen Differenzdruckwerte Δp als Funktion von der Durchflussrate q an. Des weiteren zeigt die Figur 7 die sich bei der Filtereinrichtung 6 des betreffenden Typs einstellende Zustandswert-Kennlinie "a" bei unverschmutzter Filtereinrichtung. Die in der Verknüpfungseinrichtung 34 ermittelten Zustandswerte "Z" liegen also bei unverschmutzter Filtereinrichtung 6 auf dieser Zustandswert-Kennlinie, auf der sie in Abhängigkeit vom Durchfluss gemäß dem angedeuteten Doppelpfeil 44 wandern.

Die Auswerteeinrichtung 27 enthält eine Vergleichseinrichtung 45, in der der momentan ermittelte Zustandswert "Z" mit den in der Speichereinrichtung 28 abgelegten Grenzwerten "G" verglichen wird. Solange sich dabei die ermittelten Zustandswerte im zulässigen Bereich A befinden - in Figur 7 ist dies der unterhalb der Grenzwertkennlinie "b" liegende Bereich - liegt der Normalbetrieb des Filtergerätes 1 vor, wobei allerdings schon hier die Möglichkeit besteht, den aktuellen Zustandswert "Z", eventuell auch mit Gegenüberstellung des oder der zugehörigen Grenzwerte "G", zu Kontrollzwecken über die Meldeeinrichtung 32 auszugeben. Zweckmäßiger ist es jedoch, die Maßnahmen so zu treffen, dass durch die Meldeeinrichtung 32 erst dann ein Meldesignal 33 ausgegeben wird, wenn der aktuell ermittelt Zustandswert "Z" die Grenzwertkennlinie "b" erreicht oder zu dem oberhalb der Grenzwertkennlinie "b" liegenden unzulässigen Bereich B überschreitet.

Indem zum Erkennen des Verschmutzungsgrades sowohl bei der Erfassung des momentanen Zustandswertes als auch innerhalb der gespeicherten Grenzwerte die Abhängigkeiten zwischen dem Differenzdruck Δp und der momentanen Durchflussrate q berücksichtigt werden, lassen sich unabhängig von der betriebsbedingt momentan vorliegenden Durchflussrate sehr zuverlässige Aussagen treffen. Wäre als Grenzwert beispielsweise nur ein durchflussunabhängiger Differenzdruckwert angegeben, so könnte dieser zwar für einen vorgegebenen größeren Volumenstrom relevant sein, für einen geringeren Volumenstrom jedoch viel zu hoch liegen, so dass die Grenzwerteüberschreitung zu spät erkannt würde. Gleichwohl kann es zweckmäßig sein, zusätzlich einen Grenzwert in Form eines durchflussunabhängigen maximalen Differenzdruckwertes Δₚmax vorzusehen, der bei allen Betriebsbedingungen denjenigen Grenzbereich angibt, bei dem jeder weitere Betrieb der Filtereinrichtung unzweckmäßig ist.

Ist das Filtergerät 1 wie vorliegend für einen Betrieb mit variablem Eingangsdruck p₁ ausgelegt, kann in der Speichereinrichtung 28 ein umfangreiches Grenzwert-Kennlinienfeld abgespeichert sein, das für jeden oder für ausgewählte Eingangsdrücke die betreffende Grenzwertkennlinie beinhaltet. In einem solchen Fall ist die Auswerteeinrichtung 27 zweckmäßigerweise mit einer Auswahleinrichtung 46 ausgestattet, mit der sich druckabhängig die richtige Grenzwertkennlinie auswählen lässt. Die eingangsdruckabhängige Selektion kann manuell oder vorzugsweise selbsttätig erfolgen, wobei im letzteren Fall von der Eingangsdruck-Sensoreinrichtung 35 ein erstes Selektionssignal 47 abgeleitet und der Auswahleinrichtung 46 zugeführt werden kann.

In Abhängigkeit vom Anwendungsfall kann das vorliegende Filtergerät mit unterschiedlichen Typen von Filtereinrichtungen 6 betrieben werden, also mit Filtereinrichtungen unterschiedlicher Baugröße, unterschiedlichen Aufbaus, unterschiedlicher Filterfeinheit etc. Die Erkennungsmittel 24 sind daher so ausgelegt, dass sie bei der Bestimmung des Verschmutzungsgrades den unterschiedlichen Filtereinrichtungstypen Rechnung tragen. Dies geschieht beispielsgemäß dadurch, dass in der Speichereinrichtung 28 Grenzwerte für alle im Zusammenhang mit dem Filtergerät betreibbaren Filtereinrichtungstypen abgespeichert sind, vorzugsweise in Gestalt eines Grenzwert-Kennlinienfeldes, wobei die Auswahleinrichtung 46 dahingehend ausgelegt ist, dass über sie eine typspezifische Grenzwertselektion möglich ist. Zu diesem Zweck kann die Auswahleinrichtung 46 manuell betätigbar ausgeführt sein und beispielsweise eine Schalteranordnung und/oder eine Potentiometeranordnung enthalten, durch die die gewünschte Voreinstellung erfolgen kann, beispielsweise ab Werk oder durch den Benutzer selbst.

Wesentlich komfortabler ist jedoch die beim Ausführungsbeispiel realisierte Bauform, bei der die typspezifische Auswahl durch eine elektrisches zweites Selektionssignal 48 hervorgerufen wird, das durch eine später noch im Detail beschriebene Detektionseinrichtung 52 erzeugt wird, die mit Mitteln zur Erkennung des momentan installierten Filtereinrichtungstyps ausgestattet ist.

Es versteht sich, dass im Zusammenhang mit den vom Filtereinrichtungstyp abhängigen Grenzwerten auch eingangsdruckabhängige Grenzwertkennlinien der oben bereits geschilderten Art in der Speichereinrichtung 28 abgelegt sein können.

Die elektronische Auswerteeinrichtung 27 enthält beim Ausführungsbeispiel letztlich auch noch eine elektronische Vorgabeeinrichtung 53, mit der sich die einer jeweiligen Filtereinrichtung zugeordneten Grenzwerte in variabler Weise vorgeben lassen, um bei Bedarf Anpassungen, beispielsweise an neue Filtereinrichtungstypen, vornehmen zu können.

Die Auswerteeinrichtung 24 könnte prinzipiell extern vom Filtergerät 1 platziert sein und über geeignete Kommunikationsmittel mit der Differenzdruck-Sensoreinrichtung 25, der Durchfluss-Sensoreinrichtung 26 und der Detektionseinrichtung 52 in Verbindung stehen. Eine wesentlich kompaktere und übersichtliche Anordnung zeigt das Ausführungsbeispiel, bei dem die Auswerteeinrichtung 27 als unmittelbarer Bestandteil des Filtergerätes 1 ausgeführt ist. Es befindet sich in einem an das Gehäuse des Filtergerätes 1 vorzugsweise lösbar angesetzten Kommunikationsmodul 54, das über eine erste Schnittstelle 55 zur Verbindung mit dem Gehäuse des Filtergerätes und den darin enthaltenen Elektronikbestandteilen und über eine zweite Schnittstelle 56 zur Verbindung mit einer externen elektronischen Steuereinrichtung 31 verfügt. Diese Steuereinrichtung 31 kann eine speicherprogrammierbare Steuereinrichtung (SPS) sein, die maschinelle Abläufe von an das Druckluftnetz angeschlossenen Verbrauchern steuert und in der unter anderem die Meldesignale 33 berücksichtigt werden können.

Die elektronische Auswerteeinrichtung 27 könnte auch als fester integraler Bestandteil des Filtergerätes ausgebildet sein. Ist das Filtergerät 1 als modularer Bestandteil einer Wartungseinheit ausgeführt, könnte sich die Auswerteeinrichtung 27 auch an anderer Stelle der Wartungseinheit befinden, beispielsweise an oder in einem der anderen Wartungsgeräte. Schließlich könnte die Auswerteeinrichtung 27 auch Bestandteil eines eigenständigen Moduls einer Wartungseinheit sein.

Die Auswerteeinrichtung 27 kann steuerungstechnisch mit elektronischen Bestandteilen anderer Wartungsgeräte einer Wartungseinheit verknüpft sein. Sie könnte hierbei in einen internen Datenbus eingeschaltet sein. Ferner kann die Auswerteeinrichtung 27 eine nicht näher dargestellte Feldbusstation beinhalten, die eine Kommunikation mit der Steuereinrichtung 31 über serielle Signale ermöglicht, wobei ein Signal- und Datenaustausch in beiden Richtungen realisierbar ist.

Die oben schon angesprochene Detektionseinrichtung 52 des Filtergerätes 1 hat beim Ausführungsbeispiel einen Aufbau dahingehend, dass sie die Erkennung des Typs der momentan installierten Filtereinrichtung 6 ermöglicht und ein vom detektierten Filtereinrichtungstyp abhängiges Detektionssignal hervorrufen kann, das beim Ausführungsbeispiel als zweites Selektionssignal 48 zu der Auswahleinrichtung 46 geleitet wird. Darüber hinaus ist die Detektionseinrichtung 52 in der Lage, das Vorhandensein und Nichtvorhandensein einer Filtereinrichtung am Filtergerät 1 zu detektieren und auch hier mindestens ein vom detektierten Ergebnis abhängiges elektrisches Detektionssignal hervorzurufen. Dabei ist zu erwähnen, dass die Detektionseinrichtung 52 und die zur Erkennung des Verschmutzungsgrades einer Filtereinrichtung 6 dienenden Erkennungsmittel 24 nicht notwendigerweise gleichzeitig vorhanden sein müssen, sondern sich jeweils auch allein und unabhängig voneinander in einem Filtergerät 1 realisieren lassen. Eine elektronische Auswerteeinrichtung 27 ist jedoch vorzugsweise auch beim Fehlen besagter Erkennungsmittel 24 vorhanden, die dann allerdings im Vergleich zum oben beschriebenen Ausbau in etwas "abgespeckter" Form ausgeführt sein kann, so dass zumindest eine Auswertung der hervorgerufenen Detektionssignale möglich ist. Im übrigen kann die kommunikative Verknüpfung und Platzierung der elektronischen Auswerteeinrichtung 27 im Zusammenhang mit einer Detektionseinrichtung 52 derjenigen entsprechen, wie sie oben anhand der Erkennungsmittel 24 erläutert wurde.

Beim vorliegenden Ausführungsbeispiel verfügt die Detektionseinrichtung 52 über an der installierten oder zu installierenden Filtereinrichtung 6 vorgesehene Aktivierungsmittel 57, die zumindest bei installierter Filtereinrichtung 6 direkt oder indirekt mit gehäuseseitigen Sensormitteln 58 zusammenarbeiten, um ein weiterverwertbares elektrisches Detektionssignal zu erzeugen. Das Ausführungsbeispiel zeigt eine Variante mit indirekter Kooperation zwischen den Aktivierungsmitteln 57 und den Sensormitteln 58, und zwar unter Zwischenschaltung einer besonderen Signalübertragungseinrichtung 62, die als wesentlichen Bestandteil einen in der Installations- und Deinstallationsrichtung 21, 22 der Filtereinrichtung 6 relativ zu den am Gehäuse fixierten Sensormitteln 58 verschiebbaren Stößel 63 enthält.

Der Stößel 63 ist beim Ausführungsbeispiel im Grundkörper 2 axial verschiebbar geführt, der hierzu über eine zum Filterraum 5 hin offene längliche Stößelaufnahme 64 verfügt, die den Abströmabschnitt 8 des Fluid-Hauptkanals 14 durchquert. Der Stößel 63 ist vom Filterraum 5 her in die Stößelaufnahme 64 eingesetzt, die im übrigen an ihrem dem Kopfstück 4 zugewandten Ende durch eine Abschlusswand 65 dicht verschlossen ist. Auf diese Weise ist gewährleistet, dass das im Fluid-Hauptkanal 14 strömende Druckmedium ohne besondere Abdichtmaßnahmen an einem Austritt durch die Stößelaufnahme 64 hindurch gehindert ist.

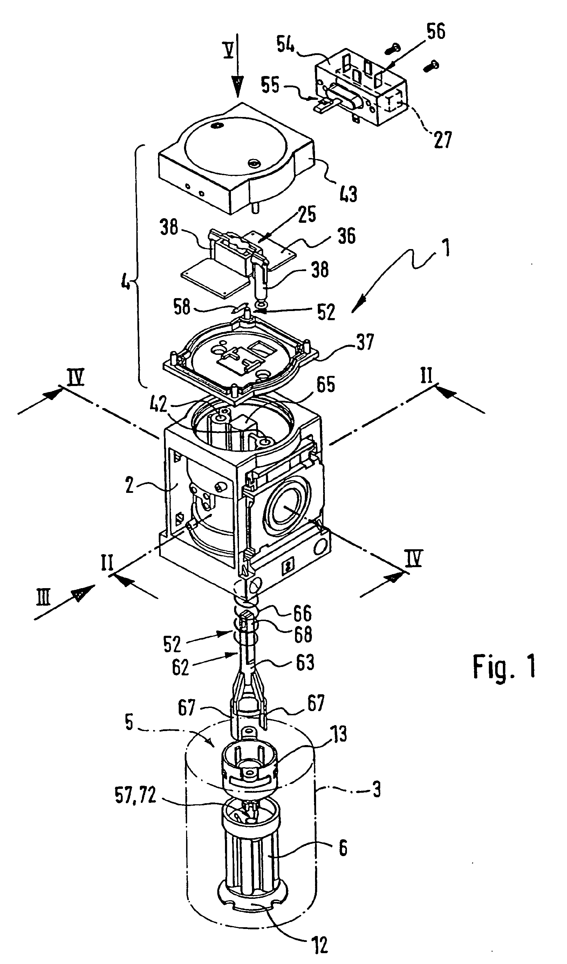

Bei der Montage wird nach dem Einsetzen des Stößels 63 das Befestigungsteil 13 angebracht, das den Stößel 63 an einem Entweichen zum Filterraum 5 hin hindert. Durch eine zwischen dem Stößel 63 und dem Gehäuse des Filtergerätes 1 wirkende, sich zweckmäßigerweise zwischen dem Stößel 63 und dem Grundkörper 2 abstützende Rückstell-Federeinrichtung 66 wird der Stößel 63 in Richtung einer Ausgangsstellung vorgespannt, die er bei entfernter Filtereinrichtung 6 einnimmt. Er stützt sich dabei in Richtung zum Filterraum 5 an dem Befestigungsteil 13 ab, das er aber gleichzeitig mit einem oder mehreren sich axial erstreckenden Antriebspartien 67 zum Filterraum 5 hin durchsetzt. Die Antriebspartien 67 können gemäß Figur 1 flügelartig ausgeführt sein.

Die Sensormittel 58 sind im Verschiebebereich des Stößels 63 platziert und sitzen beim Ausführungsbeispiel im Bereich der Abschlusswand 65, wobei sie dem zugeordneten Ende der Stößelaufnahme 64 außerhalb dieser axial vorgelagert sind. Sie befinden sich im Innern des Kopfstückes 4, wobei sie an der gegebenenfalls auch mit einer Differenzdruck-Sensoreinrichtung 25 ausgestatteten Tragplatte 36 fixiert sind. Über nicht näher dargestellte elektrische Leiter stehen die Sensormittel 58 mit der Auswerteeinrichtung 27 in Verbindung. Beim Ausführungsbeispiel sind die Sensormittel 58 als magnetisch aktivierbare Sensormittel ausgeführt, beispielsweise in Gestalt eines sogenannten Reed-Schalters.

An dem Stößel 63 sind Betätigungsmittel 68 vorgesehen, die bei der Verlagerung des Stößels 63 mitbewegt werden. Sie sind beim Ausführungsbeispiel als Permanentmagnetmittel ausgeführt, die an den dem Kopfstück 4 zugewandten Ende des Stößels 63 angeordnet sind.

Die Aktivierungsmittel 57 sind beim Ausführungsbeispiel von einer Beaufschlagungsfläche 72 gebildet, die an der in der Installationsrichtung 21 orientierten Stirnseite der Filtereinrichtung 6 vorgesehen ist. Beim Installieren der Filtereinrichtung 6 drückt diese mit der Beaufschlagungsfläche 72 gegen die Antriebspartien 67 des Stößels 63 und verlagert diesen entgegen der Kraft der Rückstell-Federeinrichtung 66 in der Stößelaufnahme 64 in Richtung zum Kopfstück 4, wobei sich die permanentmagnetischen Betätigungsmittel 68 an die magnetfeldempfindlichen Sensormittel 58 annähern, die spätestens bei Erreichen der gewünschten Endposition der Filtereinrichtung 6 ein elektrisches Detektionssignal hervorrufen. Dieses Detektionssignal kann als Bestätigungssignal herangezogen werden, um einer Steuereinrichtung 61 die korrekte Installation einer Filtereinrichtung 6 zu bestätigen, so dass diese die Inbetriebnahme von an das Druckluftnetz angeschlossenen Verbrauchern in die Wege leiten kann.

Alternativ zu der beschriebenen magnetischen Detektion könnten auch andere berühungslose Detektionsmaßnahmen vorgesehen sein, beispielsweise optischer Art. Auch ein mechanisches Zusammenwirken zwischen dem Stößel 63 und den Sensormitteln wäre denkbar, die in diesem Falle beispielsweise in Gestalt eines mechanischen Schalters ausgeführt sein könnten.

Bei einer ebenfalls nicht dargestellten Bauform wirken die an der Filtereinrichtung 6 vorgesehenen Aktivierungsmittel 57 unmittelbar mit den gehäuseseitig angeordneten Sensormitteln 58 zusammen, ohne dass eine zusätzliche Signalübertragungseinrichtung zwischengeschaltet wäre.

Es wäre selbstverständlich auch denkbar, die Anordnung so zu treffen, dass ein Detektionssignal bei Nichtvorhandensein einer Filtereinrichtung 6 hervorgerufen wird. Ebenso könnten getrennte Detektionssignale zum einen bei entfernter Filtereinrichtung und zum anderen bei installierter Filtereinrichtung erzeugt werden, was sich beim Ausführungsbeispiel durch mehrere an unterschiedlichen Stellen entlang der Verlagerungsbahn der permanentmagnetischen Betätigungsmittel 68 platzierte magnetfeldempfindliche Sensoren realisieren ließe. Vergleichbares könnte auch durch Installation eines mehrstufigen oder mehrerer einzelner mechanischer Schalter erreicht werden.

Die Detektionseinrichtung 52 kann, wie erwähnt, auch dahingehend ausgelegt sein, dass sie den momentan installierten Filtereinrichtungstyp konkret erkennt. Das entsprechende Detektionssignal kann dann sowohl als reines Bestätigungssignal für das Vorhandensein bzw. Nichtvorhandensein einer Filtereinrichtung 6 verwendet werden, als auch zur Veranlassung filtertypsspezifischer Maßnahmen. Erreichen lässt sich dieses Detektionsverhalten beispielsweise dadurch, dass man in Abhängigkeit vom eingesetzten Filtereinrichtungstyp unterschiedlich große Auslenkungen des Stößels 63 vorsieht und somit praktisch eine vom Hubweg des Stößels 63 abhängige Signalabgabe erhält.

Ein sehr einfache Maßnahme zur Realisierung der verschiedenen Hubwege des Stößels 63 besteht darin, die an den einzelnen Filtereinrichtungen 6 vorgesehenen Beaufschlagungsflächen 72 in voneinander abweichender Weise anzuordnen und/oder auszugestalten. So könnten die Beaufschlagungsflächen 72, bezogen auf die Installations- und Deinstallationsrichtung 21, 22, im installierten Zustand der jeweiligen Filtereinrichtung 6 gesehen, unterschiedlich positioniert sein, also mit mehr oder weniger großem Abstand zum Grundkörper 2 platziert sein. Der Stößel 63 wird dann je nach Filtereinrichtungstyp über eine kürzere oder längere Wegstrecke in Richtung zum Kopfstück 4 verlagert. Durch Verwendung von Sensormitteln 58, die sich aus mehreren entsprechend positionierten Einzelsensoren zusammensetzen oder die über ein mehrstufiges Sensierverhalten verfügen, lassen sich dann die entsprechenden Filtereinrichtungstypen 6 problemlos feststellen. Man könnte mit anderen Worten die Betätigungsmittel 68 und die Sensormittel 58 in Gestalt einer beliebigen Positionserfassungseinrichtung ausführen, wobei man auch auf ein analoges Wegmeßsystem zurückgreifen könnte, um eine sehr zuverlässige Positionserfassung zu ermöglichen.

Die Aktivierungsmittel 57 müssen nicht notwendigerweise direkt an der Filtereinrichtung 6 vorgesehen sein. Eine anderweitige Zuordnung zur betreffenden Filtereinrichtung 6 wäre ebenfalls denkbar, beispielsweise durch Integration in die Befestigungsschraube 7 in Verbindung mit Filtereinrichtungen 6, die typabhängig über unterschiedliche Baulängen verfügen. Auf diese Weise erfolgt je nach Filtereinrichtungstyp 6 eine unterschiedliche Einschraubtiefe der Befestigungsschraube 7, was wiederum zur Aktivierung der Sensormittel herangezogen werden kann. In allen Fällen hat die Einbeziehung einer Signalübertragungseinrichtung 62 den Vorteil, dass im Abfragebereich weder hohe Feuchtigkeit noch ein Überdruck herrschen, so dass keine besonderen Schutzmaßnahmen getroffen werden müssen.

Die Positionsabfrage der Aktivierungsmittel 57 bzw. der von diesen aktivierten Betätigungsmittel 72 kann unter den oben erwähnten grundsätzlichen Prinzipien in zahlreichen Varianten ausgeführt werden, wobei an dieser Stelle nur einige Möglichkeiten exemplarisch aufgeführt werden sollen. So könnte man beispielsweise einen oder mehrere Mikroschalter vorsehen, die direkt oder mit Hebelunterstützung mechanisch betätigt werden. Dabei könnten seitlich anfahrbare Mikroschalter verwendet werden. Des weiteren wären Schiebeschalter mit entsprechen der Anzahl der zu detektierenden Filtereinrichtungen 6 ausgeführter Anzahl von Schaltstellungen denkbar, desgleichen Federkontaktschalter.

Greift man auf eine optische Abfrage der Position zurück, könnte man sich das Prinzip der Gabellichtschranke oder das sogenannte Triangulationsprinzip zu Nutze machen.

Im übrigen muss die Positionsabfrage in Verbindung mit einem Stößel 63 nicht notwendigerweise am Stößelende erfolgen, sondern kann auch an beliebiger Längsposition entlang des Stößels stattfinden. Eine solche Variante empfiehlt sich vor allem dann, wenn die Rückstell-Federeinrichtung 66 dem Stößel 63 vorgelagert ist und sich zwischen dessen Stirnseite und der Abschlusswand 65 abstützt, so dass die am Stößel 63 vorgesehenen Betätigungsmittel 68 nicht nahe genug an die außerhalb der Abschlusswand 65 platzierten Sensormittel heranfahren könnten.

Durch die geschilderten Maßnahmen lässt sich bei Bedarf ein Filtergerät realisieren, das notwendige Inspektionsintervalle selbsttätig anzeigt, so dass notwendige Inspektions- und Reinigungsmaßnahmen nur bei tatsächlichem Bedarf erfolgen. Bei der Kommunikation mit einer externen Steuereinrichtung können gängige Kommunikationsmittel zum Einsatz gelangen, unter anderem auch Infrarot- oder Funkübertragungsarten, so dass sich der Verschmutzungsgrad bzw. die Standzeit der momentan eingesetzten Filtereinrichtung 6 auf dem Wege einer Fernabfrage ermitteln lässt.

## Patentansprüche

1. Filtergerät zum Filtern von Druckluft, mit einer zu Reinigungs- und/oder Austauschzwecken deinstallierbaren Filtereinrichtung (6), mit einer zur Detektion der Filtereinrichtung (6) dienenden und mindestens ein vom detektierten Ergebnis abhängiges elektrisches Detektionssignal hervorrufenden Detektionseinrichtung (52), mit einem zwischen einem Einlass (15) und einem Auslass (16) verlaufenden Fluid-Hauptkanal (14), der durch die installierte Filtereinrichtung (6) in einen Zuströmabschnitt (17) und einen Abströmabschnitt (18) unterteilt wird, und mit Mitteln (24) zur Erkennung des Verschmutzungsgrades der Filtereinrichtung (6) unter Berücksichtigung der zwischen dem Zuströmabschnitt (17) und dem Abströmabschnitt (18) herrschenden Druckdifferenz, **dadurch gekennzeichnet,**
- **dass** die Detektionseinrichtung (52) zur Erkennung des momentan installierten Filtereinrichtungstyps ausgebildet ist und ein filtereinrichtungstypspezifisches Detektionssignal hervorrufen kann,
- **dass** die Mittel (24) zur Erkennung des Verschmutzungsgrades der Filtereinrichtung (6) eine den Differenzdruck zwischen dem Zuströmabschnitt (17) und dem Abströmabschnitt (18) erfassende Differenzdruck-Sensoreinrichtung (25) und eine die Durchflussrate im Fluid-Hauptkanal (14) erfassende Durchfluss-Sensoreinrichtung (26) enthalten, wobei die erfassten Differenzdruck- und Durchflusswerte in einer elektronischen Auswerteeinrichtung (27) zu einem für den Verschmutzungsgrad der Filtereinrichtung (6) relevanten und in einer Vergleichseinrichtung (45) mit vorgegebenen Grenzwerten zu vergleichenden Zustandswert verknüpft werden,
- **dass** die Auswerteeinrichtung (27) eine Speichereinrichtung (28) enthält, in der Grenzwerte für mehrere unterschiedliche Filtereinrichtungstypen abgespeichert sind,
- und **dass** eine Auswahleinrichtung (46) zur typspezifischen Grenzwertselektion unter Berücksichtigung des anliegenden Detektionssignals der Detektionseinrichtung (52) vorhanden ist.

2. Filtergerät nach Anspruch 1, **dadurch gekennzeichnet, dass** die Detektionseinrichtung (52) über der Filtereinrichtung (6) zugeordnete Aktivierungsmittel (57) verfügt, die bei installierter Filtereinrichtung (6) zur Erzeugung eines Detektionssignales direkt oder indirekt mit gehäuseseitigen Sensormitteln (58) zusammenarbeiten können.

3. Filtergerät nach Anspruch 2, **gekennzeichnet durch** mechanisch aktivierbare Sensormittel (58), beispielsweise in Gestalt eines oder mehrerer mechanischer Schalter.

4. Filtergerät nach Anspruch 2 oder 3, **gekennzeichnet durch** berührungslos, beispielsweise optisch oder magnetisch, aktivierbare Sensormittel (58).

5. Filtergerät nach Anspruch 4, **dadurch gekennzeichnet, dass** die Sensormittel (58) mindestens einen magnetfeldempfindlichen Sensor enthalten, der auf einen bei der Installation und/oder bei der Deinstallation der Filtereinrichtung (6) bewegten Permanentmagneten anspricht.

6. Filtergerät nach einem der Ansprüche 2 bis 5, **dadurch gekennzeichnet, dass** gehäuseseitig am Filtergerät (1) eine sich beim Installations- und Deinstallationsvorgang der Filtereinrichtung (6) durch Einwirkung der Aktivierungsmittel (57) verlagernde Signalübertragungseinrichtung (62) vorhanden ist, die über an ihr vorgesehene Betätigungsmittel (68) mit den Sensormitteln (58) zusammenarbeitet.

7. Filtergerät nach Anspruch 6, **dadurch gekennzeichnet, dass** die Signalübertragungseinrichtung (62) einen in der Installations- und Deinstallationsrichtung (21, 22) der Filtereinrichtung (6) relativ zu den Sensormitteln (58) verschiebbaren Stößel (63) aufweist.

8. Filtergerät nach Anspruch 6 oder 7, **dadurch gekennzeichnet, dass** die Betätigungsmittel (68) zur berührungslosen Aktivierung der Sensormittel (58) und insbesondere als Permanentmagnetmittel ausgeführt sind.

9. Filtergerät nach einem der Ansprüche 6 bis 8, **dadurch gekennzeichnet, dass** die Aktivierungsmittel (57) von mindestens einer der Filtereinrichtung (6) zugeordneten und vorzugsweise unmittelbar an der Filtereinrichtung (6) vorgesehenen Beaufschlagungsfläche (72) gebildet sind, die auf die Signalübertragungseinrichtung (62) einwirken können.

10. Filtergerät nach einem der Ansprüche 1 bis 9, **dadurch gekennzeichnet, dass** die Detektionseinrichtung (52) zur Detektion des Vorhandenseins und/oder des Nichtvorhandenseins einer Filtereinrichtung (6) ausgebildet ist.

11. Filtergerät nach einem der Ansprüche 1 bis 10, **gekennzeichnet durch** im Zusammenhang mit den verschiedenen Filtereinrichtungstypen unterschiedlich gestaltete Aktivierungsmittel (57), die eine filtertypspezifische Betätigung der Sensormittel (58) hervorrufen.

12. Filtergerät nach Anspruch 11 in Verbindung mit Anspruch 9, **dadurch gekennzeichnet, dass** die den Filtereinrichtungen (6) unterschiedlichen Typs zugeordneten Beaufschlagungsflächen (72) im jeweils installierten Zustand gesehen mit Bezug zur Installations- und Deinstallationsrichtung (21, 22) der Filtereinrichtungen (6) unterschiedlich positioniert sind.

13. Filtergerät nach einem der Ansprüche 1 bis 12, **dadurch gekennzeichnet, dass** die Mittel (24) zur Erkennung des Verschmutzungsgrades der Filtereinrichtung (6) eine den im Zuströmabschnitt (17) des Fluid-Hauptkanals (14) herrschenden Eingangsdruckwert erfassende Eingangsdruck-Sensoreinrichtung (35) enthalten, wobei der ermittelte Eingangsdruckwert in der elektronischen Auswerteeinrichtung (27) bei der Ermittlung des momentanen Zustandswertes berücksichtigt wird.

14. Filtergerät nach einem der Ansprüche 1 bis 13, **dadurch gekennzeichnet, dass** die Auswerteeinrichtung (27) als unmittelbarer Bestandteil des Filtergerätes (1) oder einer das Filtergerät (1) enthaltenden Druckluft-Wartungseinheit ausgeführt ist.

## Claims

1. Filter unit for the filtering of compressed air, with a filter device (6) which may be de-installed for the purposes of cleaning and/or replacement, with a detection device (52) used to detect the filter device (6) and generating one or more detection signals depending on the detected result, with a main fluid passage (14) running between an inlet (15) and a outlet (16) and divided by the installed filter device (6) into an inflow section (17) and an outflow section (18), and with means (24) for detecting the degree of contamination of the filter device (6) taking into account the differential pressure between the inflow section (17) and the outflow section (18), **characterised in that**
- the detection device (52) is designed to recognise the type of filter device currently installed and is able to generate a filter-device-specific detection signal,
- the means (24) for detecting the degree of contamination of the filter device (6) contain a differential pressure sensor device (25) which detects the differential pressure between the inflow section (17) and the outflow section (18), and a flow sensor device (26) detecting the flow rate in the main fluid passage (14), wherein the detected differential pressure and flow values are combined in an electronic evaluation unit (27) to give a status value which is relevant to the degree of contamination of the filter device (6) and may be compared with preset limit values in a comparator (45),
- the evaluation unit (27) contains a memory device (28) in which limit values for several different filter device types may be stored,
- and that there is a selector unit (46) for type-specific limit value selection, taking into account the detection signal provided by the detection device (52).

2. Filter unit according to claim 1, **characterised in that** the detection device (52) has activation means (57) assigned through the filter device (6) and which, with the filter device (6) installed, are able to interact to generate a detection signal directly or indirectly with housing-side sensor means (58).

3. Filter unit according to claim 2, **characterised by** sensor means (58) which may be actuated mechanically, for example in the form of one or more mechanical switches.

4. Filter unit according to claim 2 or 3, **characterised by** sensor means (58) which may be actuated without contact, for example by optical or magnetic means.

5. Filter unit according to claim 4, **characterised in that** the sensor means (58) contain one or more magnetic-field-sensitive sensors which respond to a permanent magnet moved during installation and/or de-installation of the filter device (6).

6. Filter unit according to any of claims 2 to 5, **characterised in that** there is provided on the housing-side of the filter unit (1) a signal transmission device (62) which is displaced during the installation and de-installation process of the filter device (6) through the action of activation means (57) and which works in conjunction with the sensor means (58) through actuating means (68) provided on it.

7. Filter unit according to claim 6, **characterised in that** the signal transmission device (62) has a ram (63) which is able to slide relative to the sensor means (58) in the direction of installation and de-installation (21, 22) of the filter device (6).

8. Filter unit according to claim 6 or 7, **characterised in that** the actuating means (68) are designed for non-contact activation of the sensor means (58) and in particular are permanent magnet means.

9. Filter unit according to any of claims 6 to 8, **characterised in that** the activation means (57) are formed by one or more pressure-loading surfaces (72) assigned to the filter device (6) and preferably provided directly on the filter device (6), and which are able to act on the signal transmission device (62).

10. Filter unit according to any of claims 1 to 9, **characterised in that** the detection device (52) is designed to detect the presence and/or absence of a filter device (6).

11. Filter unit according to any of claims 1 to 10, **characterised by** activation means (57) of differing design for the various filter device types, which generate filter-type-specific actuation of the sensor means (58).

12. Filter unit according to claim 11 in conjunction with claim 9, **characterised in that** the pressure-loading surfaces (72) assigned to different types of filter device (6), viewed in their respective installed states, are at different positions with reference to the installation and de-installation direction (21, 22) of the filter devices (6).

13. Filter unit according to any of claims 1 to 12, **characterised in that** the means (24) for detecting the degree of contamination of the filter device (6) contain an input pressure sensor device (35) which detects the input pressure value prevailing in the inflow section (17) of the main fluid passage (14), wherein the input pressure value determined is taken into account in the electronic evaluation unit (27) in determining the momentary status value.

14. Filter unit according to any of claims 1 to 13, **characterised in that** the evaluation unit (27) is designed as a direct component of the filter unit (1) or of a compressed air conditioner unit containing the filter unit (1).

## Revendications

1. Appareil de filtration pour filtrer de l'air comprimé, comprenant un dispositif de filtration (6) pouvant être désinstallé à des fins de nettoyage et/ou de remplacement, un dispositif de détection (52) servant à détecter le dispositif de filtration (6) et provoquant au moins un signal de détection électrique en fonction du résultat détecté, un canal de fluide principal (14) s'étendant entre une entrée (15) et une sortie (16), ledit canal étant divisé par le dispositif de filtration (6) installé en une section d'amenée (17) et une section d'évacuation (18), et des moyens (24) pour identifier le degré d'encrassement du dispositif de filtration (6) en tenant compte de la différence de pression régnant entre la section d'amenée (17) et la section d'évacuation (18), **caractérisé en ce que**
- le dispositif de détection (52) est réalisé pour identifier le type de dispositif de filtration actuellement installé et peut provoquer un signal de détection spécifique au type de dispositif de filtration,
- les moyens (24) pour identifier le degré d'encrassement du dispositif de filtration (6) comprennent un dispositif de capteur de pression différentielle (25) détectant la pression différentielle entre la section d'amenée (17) et la section d'évacuation (18) et un dispositif de capteur de débit (26) détectant le débit de passage dans le canal de fluide principal (14), les valeurs de pression différentielle et de débit détectées étant combinées dans un dispositif d'évaluation électronique (27) en une valeur d'état significative pour le degré d'encrassement du dispositif de filtration (6) et à comparer à des valeurs de seuil prédéfinies dans un dispositif de comparaison (45),
- le dispositif d'évaluation (27) comprend un dispositif de mémoire (28) dans lequel sont mémorisées des valeurs de seuil pour plusieurs types de dispositif de filtration différents, et
- un dispositif de sélection (46) est prévu pour une sélection de valeur de seuil spécifique au type, en tenant compte du signal de détection appliqué du dispositif de détection (52).

2. Appareil de filtration selon la revendication 1, **caractérisé en ce que** le dispositif de détection (52) dispose de moyens d'activation (57) associés au dispositif de filtration (6) qui peuvent coopérer directement ou indirectement avec des moyens capteurs (58) côté boîtier lorsque le dispositif de filtration (6) est installé, afin de produire un signal de détection.

3. Appareil de filtration selon la revendication 2, **caractérisé par** des moyens capteurs (58) pouvant être activés de façon mécanique, par exemple sous la forme d'un ou de plusieurs commutateurs mécaniques.

4. Appareil de filtration selon la revendication 2 ou 3, **caractérisé par** des moyens de capteur (58) pouvant être activés sans contact, par exemple de façon optique ou magnétique.

5. Appareil de filtration selon la revendication 4, **caractérisé en ce que** les moyens capteurs (58) comprennent au moins un capteur sensible à un champ magnétique et répondant à un aimant permanent déplacé lors de l'installation et/ou de la désinstallation du dispositif de filtration (6).

6. Appareil de filtration selon l'une des revendications 2 à 5, **caractérisé en ce qu'**il existe sur l'appareil de filtration (1), du côté boîtier, un dispositif de transmission de signal (62) se décalant lors de l'opération d'installation et de désinstallation du dispositif de filtration (6) sous l'effet des moyens d'activation (57), ledit dispositif de transmission de signal coopérant, par l'intermédiaire de moyens d'actionnement (68) prévus sur celui-ci, avec les moyens capteurs (58).

7. Appareil de filtration selon la revendication 6, **caractérisé en ce que** le dispositif de transmission de signal (62) présente un poussoir (63) pouvant être déplacé dans la direction d'installation et de désinstallation (21, 22) du dispositif de filtration (6) par rapport aux moyens de capteur (58).

8. Appareil de filtration selon la revendication 6 ou 7, **caractérisé en ce que** les moyens d'actionnement (68) sont conçus pour une activation sans contact des moyens capteurs (58) et en particulier comme des moyens à aimant permanent.

9. Appareil de filtration selon l'une des revendications 6 à 8, **caractérisé en ce que** les moyens d'activation (57) sont formés par au moins une surface de sollicitation (72) associée au dispositif de filtration (6) et prévue de préférence directement sur le dispositif de filtration (6), lesdits moyens pouvant agir sur le dispositif de transmission de signal (62).

10. Appareil de filtration selon l'une des revendications 1 à 9, **caractérisé en ce que** le dispositif de détection (52) est conçu pour détecter la présence et/ou l'absence d'un dispositif de filtration (6).

11. Appareil de filtration selon l'une des revendications 1 à 10, **caractérisé par** différents moyens d'activation (57) de forme différente en relation avec les différents types de dispositif de filtration, lesdits moyens provoquant un actionnement spécifique au type de filtre des moyens capteurs (58).

12. Appareil de filtration selon la revendication 11 en conjonction avec la revendication 9, **caractérisé en ce que** les surfaces de sollicitation (72) associées aux dispositifs de filtration (6) de différents types, respectivement vues à l'état installé, sont positionnées différemment par rapport à la direction d'installation et de désinstallation (21, 22) des dispositifs de filtration (6).

13. Appareil de filtration selon l'une des revendications 1 à 12, **caractérisé en ce que** les moyens (24) pour identifier le degré d'encrassement du dispositif de filtration (6) comprennent un dispositif de capteur de pression d'entrée (35) détectant la valeur de pression d'entrée régnant dans la section d'amenée (17) du canal de fluide principal (14), la valeur de pression d'entrée déterminée étant prise en compte dans le dispositif d'évaluation électronique (27) pour la détermination de la valeur d'état actuelle.

14. Appareil de filtration selon l'une des revendications 1 à 13, **caractérisé en ce que** le dispositif d'évaluation (27) est réalisé comme un composant direct de l'appareil de filtration (1) ou d'une unité de maintenance à air comprimé comprenant l'appareil de filtration (1).
